# EUROPEAN PATENT APPLICATION

(11) **EP 2 129 113 A1**
(43) Date of publication of application: **02.12.2009**
(21) Application number: 08017883.3
(22) Date of filing: 13.10.2008
(51) Int. Cl.: H04N 7/16, H04N 7/173

(54) **Open cable application platform (OCAP) and set-top box (STB) based calendering application**

(30) Priority: 30.05.2008 US 130642
(71) Applicant: Avaya Inc., Basking Ridge, New Jersey 07920 (US)
(72) Inventor: Campagna, Theresa, 19115 Philadelphia PA (US); Weber, Gregory D., 80031 Westminister CO (US); Chavez, David Lee Jr., 80021 Broomfield Colorado (US)
(74) Representative: Walkenhorst, Andreas

(57) **Abstract**

One exemplary aspect is advanced multimedia communications via OCAP using customer specific profiles resident in the STB for calendar management. Additional aspects relate to invitation management including auto-calendaring, forwarding of an invitation details to a specific destination, conflict resolution, auto-rescheduling, global rescheduling and automatic reminders based on an invitation. Still further aspects relate to enabling confirmation of an appointment based on a received reminder and a technique to confirm an appointment with the ability to forward an appointment confirmed identifier to the appointment setter. Rescheduling routines are also provided for use with the calendaring application.

## Description

### CROSS-REFERENCE TO RELATED APPLICATIONS

Cross reference is made to:
U.S. Patent Application No. 12/050,575, filed March 18, 2008, entitled "OPEN CABLE APPLICATION PLATFORM SET-TOP BOX (STB) PERSONAL PROFILES AND COMMUNICATIONS APPLICATIONS," (Atty. Docket No.: 4366BKD-3);
U.S. Patent Application No. 12/050,605, filed March 18, 2008, entitled "OPEN CABLE APPLICATION PLATFORM SET-TOP BOX (STB) PERSONAL PROFILES AND COMMUNICATIONS APPLICATIONS," (Atty. Docket No.: 4366BKD-4);
U.S. Patent Application No. 12/050,634, filed March 18, 2008, entitled "OPEN CABLE APPLICATION PLATFORM SET-TOP BOX (STB) PERSONAL PROFILES AND COMMUNICATIONS APPLICATIONS," (Atty. Docket No.: 4366BKD-5); and
U.S. Patent Application No. 12/050,677, filed March 18, 2008, entitled "OPEN CABLE APPLICATION PLATFORM SET-TOP BOX (STB) PERSONAL PROFILES AND COMMUNICATIONS APPLICATIONS," (Atty. Docket No.: 4366BKD-7), all of which are incorporated herein by reference in their entirety.

### FIELD OF THE INVENTION

This invention relates generally to set-top boxes and more particularly to one or more profiles associated with a set-top box. Additional aspects of the invention relate to the inter-operability of STBs, one or more profiles, and one or more applications associated with an open cable application platform enabling calendaring functionality.

### BACKGROUND

The OpenCable™ Platform specification can be found at http://www.opencable.com/ocap/, "OpenCable Application Platform Specification (OCAP) 1.1," which is incorporated herein by reference in its entirety. OCAP is an operating system layer designed for consumer electronics, such as STBs, that connect to a cable television system. Generally, the cable company controls what OCAP programs can be run on the STB. OCAP programs can be used for interactive services such as eCommerce, online banking, program guides and digital video recording. Cable companies have required OCAP as part of the CableCard 2.0 specification, and they indicate that two way communications by third party devices on their networks will require them to support OCAP. More specifically, OCAP is a Java® language-based software/middleware portion of the OpenCable initiative. OCAP is based on the Globally Executable MHP (GEM)-standard, as defined by CableLabs. Because OCAP is based on GEM, OCAP shares many similarities with the Multimedia Home Platform (MHP) standard defined by the Digital Video Broadcasting (DVB)-project. The MHP was developed by the DVB Project as the world's first open standard for interactive television. It is a Java® language-based environment which defines a generic interface between interactive digital applications and the terminals on which those applications execute. MHP was designed to run on DVB platforms but there was a demand to extend the interoperability it offers to other digital television platforms. This demand gave rise to GEM, or Globally Executable MHP, a framework which allows other organizations to define specifications based on MHP.

One such specification is OCAP which has been adopted by the US cable industry. In OCAP the various DVB technologies and specifications that are not used in the US cable environment are removed and replaced by their functional equivalents, as specified in GEM. On the terrestrial broadcast side, CableLabs and the Advanced Television Systems Committee (ATSC) have worked together to define a common GEM-based specification, Advanced Communications Application Platform (ACAP), which will ensure maximum compatibility between cable and over-the-air broadcast receivers.

### SUMMARY OF THE INVENTION

These technologies provide the platform for a greatly enhanced, multimediaenabled, customer communication experience. Specifically, one exemplary aspect of this invention is advanced multimedia communications via OCAP using customer specific profiles resident in the STB for calendar management. Telephony application servers have already been proposed by CableLabs and others. Phone, e.g., cell phone, soft phone, etc, and STB association can be done in the Multiple Service Operators (MSOs), e.g., cable companies, network. However, an exemplary aspect of this invention utilizes storage of personalized information and communication preferences in the STB in a structured format or via cookies. The combination of feature rich telephony applications with the personalized data stored in a STB facilitates a feature rich communications session. Providing advanced multimedia communications applications using personalized data resident in STBs could allow the MSOs to provide, for example, many previously unavailable services.

The types of personal information that can be stored in STBs may include, but are not limited to, communication preferences, calendar preferences, such as availability, rules governing availability, etc, personal information, etc. Examples of communications preferences could include when to be reached or not reached for scheduling, rescheduling, or reminders, contact numbers and modalities, calendar synchronization, etc., and in general any information related to calendaring, scheduling or communications. Examples of personal information could include general information on availability, restrictions on when certain activities or events can be scheduled, and general, any information about an individual(s) schedule. Other such personal information categories and variations stored in STBs as can be imagined by one schooled in this art are also within the scope of this invention disclosure.

Screen menus, pushed URLs, and adaptations specific to various devices connected to STBs (such as different size screens, different capability devices, etc.) can be rendered as part of this process of enhanced communications. Similarly, contextual favorites or preferences can be provided depending on what content is being displayed or interacted with.

When one combines the integration of a profile, such as personal information in STBs, with applications resident in a variety of places on the MSO's network, these new value added services are enabled.

A few simple examples of what is possible could include, but are not limited to, enhanced web enabled service transactions, e.g., calendaring, reminders, confirming appointments, rescheduling appointments, resolving scheduling conflicts, and the like, mobile requests for scheduling using the profiles and communication capabilities of the STB/MSO network, display of or sharing of calendared information among two or more individuals, entities, etc.

For example, the user can initiate a calendaring transaction on the STB itself. The exemplary menu based request will use the stored calendaring and availability information to key a web service request. If the request should trigger a human response (like communication with a doctor's office to schedule an appointment), then the STB information can key to the customer phone for an outbound call to coordinate an office visit and perhaps discuss the nature of the appointment. The exemplary embodiments discussed herein just hint at the power of the proposed enhancement to this new communications paradigm. There are many other potential examples and applications to serve them that are possible.

For example, it is generally recognized that an intelligent agent is a software agent that assists users and will act on their behalf in performing non-repetitive computer-related tasks. An agent in this sense of the word is like an insurance agent or a travel agent. While the working of software agents used for operator assistance or data mining (sometimes referred to as bots) is often based on fixed preprogrammed rules, "intelligent" in this context is often taken to imply the ability to adapt and learn. The term "personal" indicates that a particular intelligent agent is acting on behalf of an individual or a small collective group of users such as a household, business entity, etc.

OCAP provides another venue for an intelligent personal agent but offers several advantages compared with previous attempts at this type of application. One is the fact that STBs are already equipped to handle two-way, full-motion, High Definition (HD) video, as well as any other communication media. Another advantage is the integration of the personal profile information with the Intelligent Personal Agent application. Another is the improved security discussed herein. The extensibility and the interoperability that the Session Initiation Protocol (SIP) adds to Packet Cable 2.0 allows the full gamut of communications modalities and devices to be leveraged.

Another exemplary aspect of the invention is the use of personalized information and personal preferences contained in a STB in combination with an intelligent personal agent application and improved security to provide, for example, a greatly enhanced user experience.

The fact that sensitive information about the user can be stored within their own STB reduces security concerns associated with having too much web presence. The disclosure or query of the personal information can be established on a trust basis which also helps with security and privacy. The push of security information such as DCAS makes the environment significantly safer. One could also envision if there are multiple users within one household, that they can each have a profile that is login protected for personal privacy. Parents would be able to set certain conditions/limits for children using the intelligent personal agent application that would also add to the safety and age appropriate use of the application.

The two-way, full-motion, HD capable video without many of the quality issues associated with the Internet is a significant enhancement to current intelligent personal agents. It could provide an opportunity for video messages, such as an invitation, to be personalized.

The personal information stored in the STB can convey many exemplary benefits such as communication preferences, alternate contact modalities, priority preferences, trusted contacts, personal information, as well as multimedia messaging, etc. The integration of the personal information with the intelligent personal agent also enhances the user experience.

There are several examples of what this idea can provide the user that current intelligent agents are not able to do. One is the ability to greet calling parties, for example who are calling to extend an invitation, with a full-motion video greeting unique to that calling party. Another is the ability to handle more complicated transactions.

Aspects of the invention thus relate to one or more profiles on a STB.
Aspects of the invention also relate to utilization of the one or more profiles in conjunction with a calendaring application.

Still further aspects of the invention relate to adding, modifying or deleting one or more calendar entries.

Additional aspects of the invention relate to forwarding a reminder based on a calendared item.

Still further aspects of the invention relate to initiating one or more of a phone communication, video conference and multi-media session to a party associated with a calendared item.

Additional aspects of the invention relate to invitation management including autocalendaring, forwarding of an invitation details to a specific destination, conflict resolution, auto-rescheduling, global rescheduling and automatic reminders based on an invitation.

Still further aspects of the invention relate to enabling confirmation of an appointment based on a received reminder. Aspects also relate to a technique utilized to confirm an appointment with the ability to forward an appointment confirmed identifier to the appointment setter. Still further aspects of the invention relate to a rescheduling routine for use with a calendaring application.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation done without material human input when the process or operation is performed. However, a process or operation can be automatic even if performance of the process or operation uses human input, whether material or immaterial, received before performance of the process or operation. Human input is deemed to be material if such input influences how the process or operation will be performed. Human input that consents to the performance of the process or operation is not deemed to be "material".

The term "computer-readable medium" as used herein refers to any tangible storage and/or transmission medium that participate in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, a carrier wave as described hereinafter, or any other medium from which a computer can read. A digital file attachment to e-mail or other self-contained information archive or set of archives is considered a distribution medium equivalent to a tangible storage medium. When the computer-readable media is configured as a database, it is to be understood that the database may be any type of database, such as relational, hierarchical, object-oriented, and/or the like. Accordingly, the invention is considered to include a tangible storage medium or distribution medium and prior art-recognized equivalents and successor media, in which the software implementations of the present invention are stored.

The terms "determine", "calculate" and "compute," and variations thereof, as used herein, are used interchangeably and include any type of methodology, process, mathematical operation or technique.

The term "module" as used herein refers to any known or later developed hardware, software, firmware, artificial intelligence, fuzzy logic, or combination of hardware and software that is capable of performing the functionality associated with that element. Also, while the invention is described in terms of exemplary embodiments, it should be appreciated that individual aspects of the invention can be separately claimed.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below.

### BRIEF DESCRIPTION OF THE DRAWINGS

Fig. 1 illustrates an exemplary content system according to this invention;
Fig. 2 illustrates an exemplary set-top box according to this invention;
Fig. 3 illustrates an exemplary profile according to this invention;
Fig. 4 is a flowchart outlining an exemplary method for calendaring items according to this invention;
Fig. 5 is a flowchart outlining an exemplary method for managing an invitation according to this invention;
Fig. 6 is a flowchart outlining an exemplary method for forwarding reminders based on a scheduled appointment according to this invention;
Fig. 7 is a flowchart illustrating in greater detail the confirm appointment step of Fig. 6; and
Fig. 8 is a flowchart outlining in greater detail the reschedule appointment step of Fig. 6.

### DETAILED DESCRIPTION

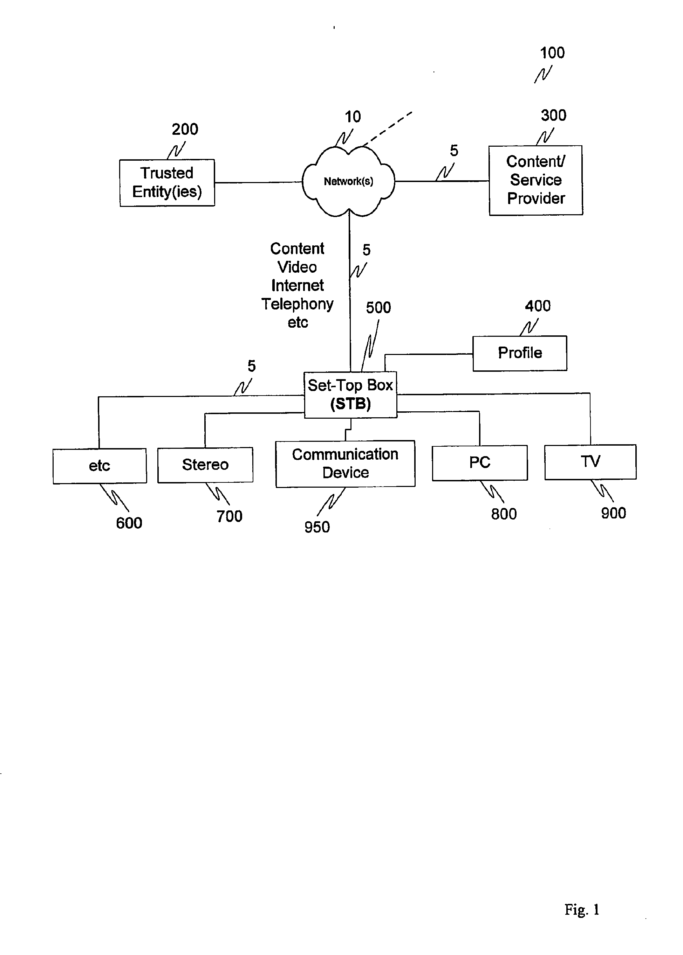

Fig. 1 illustrates an exemplary content system 100. This system 100 comprises one or more trusted entities 200, one or more content/service providers 300, such as a cable company, and a set-top box 500 all inter-connected by one or more links 5 and networks 10. The set-top box 500 is connected to one or more of a stereo 700, PC 800, TV 900, or in general any electronic device as represented by box 600. Associated with the set-top box 500 are one or more profiles 400, as will be discussed in detail hereinafter.

Additionally, the set-top box 500 is connected to one or more communication devices 950, such as a cell phone, soft phone, SIP enabled communication device, PDA, mobile communications device, or the like. In general, the set-top box 500 is capable of receiving content, such as video content, as well as providing services such as access to the internet, telephony service, and the like.

As will be discussed, the set-top box is also capable of providing services such that, for example, a user located at one of the attached devices utilizes a set-top box 500 to assist with the calendaring and management of one or more items.

Typically, the content/service provider 300 provides content, such as video content, to a user via the set-top box 500, and ultimately to, for example, the PC 800 or TV 900. An exemplary embodiment of the present invention expands on this concept and in conjunction with the profile 400, provides enhanced content capabilities through the set-top box 500.

Furthermore, and in accordance with an optional exemplary embodiment, trusted relationships can be established between a content/service provider 300 and/or one or more trusted entities 200. For example, the content/service provider 300, such as a cable company, can negotiate trusted relationships with various entities. These relationships can be based on a request from a user associated with a set-top box. For example, the user can select one or more other friends and request these friends be designated as trusted entities. Once an entity is designated as trusted, various service requests and interactions with the set-top box 500 and the trusted entity can be handled in a manner different than entities that are not designated as trusted.

The association of the profile 400 with a set-top box 500 allows, for example, a richer communications environment to be provided to a user. For example, a customer at their home can place a call into a customer service number, for example, to schedule a repair of a failed appliance. Instead of the call being rerouted from center to center based on the information the customer inputs via the phone, the call can use a common customer routing center. The routing center, which could be one of the trusted entities 200, can use the phone number to look up a key set-top box entry for the customer, for example, the make and model of the refrigerator that failed, and the center can then electronically retrieve the stored service information entry via the set-top box 500 from the profile 400. Information retrieved from the profile 400 can be combined with the caller's requested service, and forwarded to the appropriate repair center agent with the information retrieved from the customer set-top box, relieving a need to interrogate other databases or the user and making for more efficient contact centers. Additional information for the customer can be displayed on, for example, the TV 900, PC 800 or the like associated with the set-top box 500. This information could include, for example, some simple tests to run to make sure the basics of the appliance are correct. An animation could also be shown to the consumer for where to locate the model/serial number of the appliance that failed.

In another example, the customer can initiate a calendaring request on the set-top box itself. For example, a menu-based request can use stored information in the profile 400 to key a web service request. If the request triggers a human response, like the coordination of scheduling of a party, the set-top box information can key to the customer phone for an outbound call or multi-media communication session with the one or more other parties to confirm and coordinate scheduling.

Therefore, in accordance with one exemplary embodiment, the profile 400 can be used, for example, to assist with managing appointment(s) and can be utilized in conjunction with the set-top box and related equipment to provide scheduling service for the set-top box holder. The set-top box can also utilize intelligent agent capabilities to help manage, reschedule, and remind the set-top box holder (or one or more parties associated with the set-top box) of one or more appointments.

For example, the same mechanisms can be used to push structured information and menu information for a calendared item through to provide a richer customer service experience. For example, the calendared item can be associated with one or more of an audio, video, or multi-media message that, for example, contains supplemental information about the activity with which the invitation is associated. This richer experience combined with the ease of retrieval of information associated with the invitation provides a significantly richer customer experience than that which can be offered by traditional calendaring applications.

In accordance with an exemplary embodiment, the profile 400 used in conjunction with one or more applications resident on the set-top box provides a richer experience for the user of the set-top box for interacting with one or more other individuals, content or service providers, trusted entities, or other entities, or in general any entity that may be able to provide a richer customer experience based on the information available to them via the profile 400.

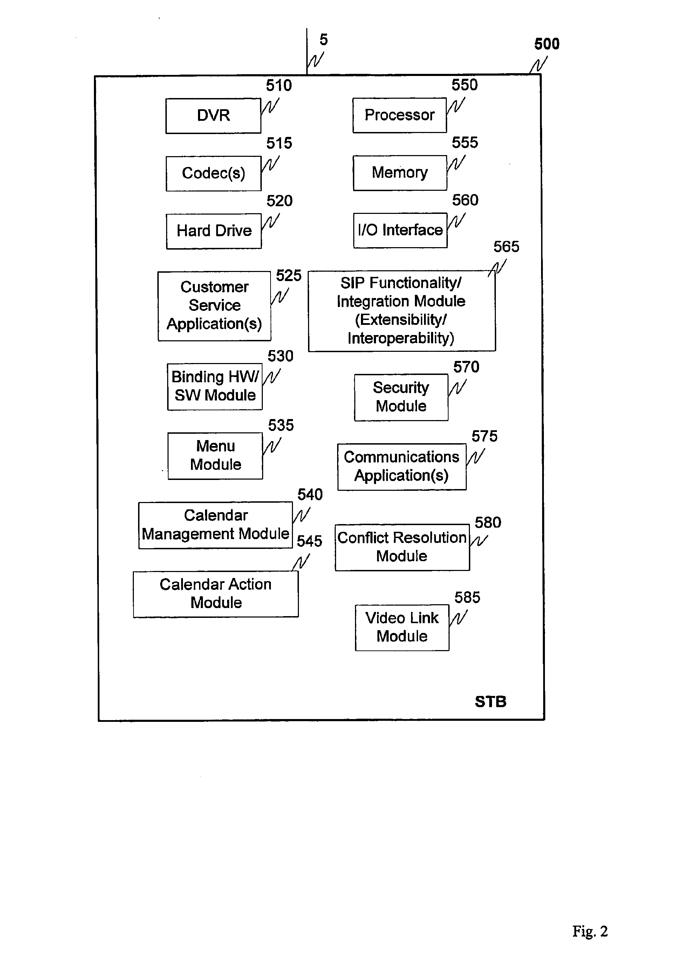

Fig. 2 illustrates in greater detail an exemplary set-top box 500. The exemplary set-top box includes one or more of a DVR 510, codec(s) 515, hard drive 520, one or more customer service applications 525, a binding hardware/software module 530, a menu module 535, a calendar management module 540, a calendar action module 545, a processor 550, a memory 555, an I/O interface 560, a SIP functionality/integration module 565, a security module 570, one or more communications applications 575, a conflict resolution module 580 and a video link module 585.

The DVR 510 can be used to store video information, as is conventionally known, and can also be used as a storage device for one or more applications on the set-top box. For example, the DVR 510 can be used for a back-up for non-active applications, or active applications can be run on, for example, the hard drive 520 in conjunction with one or more of the processor 550, memory 555, and I/O interface 560.

The set-top box can also include one or more codecs 515 that provide, for example, one or more of coding and de-coding of video information, audio information, HD video information, multi-media information or in general any audio or video format received by or sent from a set-top box 500.

The set-top box 500 also includes one or more customer service applications 525. These customer service applications can cooperate with information in the profile 400 to provide various functionalities to a user at one or more of the TV 900, PC 800, stereo 700, communications device 950, or in general any device 600 associated with the set-top box 500. As discussed, these customer service applications can include, but are not limited to, profile management applications, calendaring applications, scheduling applications, conflict resolution applications, or in general any application that is capable of operating on or in conjunction with the set-top box 500. As will be appreciated, the application need not run exclusively on the set-top box 500, but could operate in conjunction with one or more applications on, for example, a connected electronic device, such as PC 800.

The hardware/software binding module 530 allows the set-top box 500 to be associated with one or more other electronic devices, such as a telephone, soft phone, or in general any device that is capable of being bound to the set-top box 500. For example, if a user activates a customer service application on the set-top box 500 to cancel or reschedule a particular appointment with a trusted entity 200, upon the intelligent agent module (discussed below) determining that a reschedule request has been initiated, the intelligent agent module can request the hardware/software binding module to initiate a communication to the user to determine an appropriate action to take. This binding can be done, for example, with the cooperation of the SIP functionality/integration module 565, in that SIP provides a convenient mechanism to establish, tear-down, or redirect communications. More specifically, stored within the profile can be information specifying communication device information associated with the user of the set-top box. SIP protocols can be initiated from the set-top box to the phone associated with the user to, for example, confirm an appointment, indicate whether they are available for an appointment, place a call to an intelligent to assist with scheduling or rescheduling of one or more appointments, or the like. A message indicating that a communication has been initiated can also optionally then be displayed on one or more of the phone and a device associated with STB 500. It should be appreciated that this communication can be in many different formats including a text message, an instruction to calendar on a PDA, an instruction to add an appointment in an email-type program (such as Outlook®), a voice message, or in general any format capable forwarding calendaring information.

The menu module 535 provides an interface, such as a graphical user interface, which can be displayed on one or more of the TV 900, PC 800, communications device 950 or in general any display device that allows manipulation of, for example, one or more of the features of the set-top box 500 and one or more profiles. For example, a user could utilize the menu module 535 to edit one or more profiles 400 stored on the set-top box. Additionally, the menu module 535 can be used in conjunction with various applications residing on the set-top box to provide necessary menus to the user associated with a particular calendaring application or functionality. For example, the menu module 535 can provide the various interfaces that allow a user to interact with calendaring functionality and can also cooperate with one or more of the trusted entities and content/service providers to provide menus to a user of the set-top box 500 in conjunction with one or more calendaring functions.

For example, if the set-top box 500 is in communication with a friend's set-top box, via the network 10, the friend could push a series of multi-media clips to the user that correspond to specific activities on certain dates. With these menus, the user could select one or more of the activities and have the dates on which those activities are available automatically associated with their calendar. SIP functionality could also be utilized to spawn a call to the friend for discussion of items related to the proposed activities. Personal preferences of the user could also optionally be layered on top of the menus pushed to the STB to account for their own personal preferences, such as skin-type display characteristics.

The calendar management module 540 provides the various functionality that allows for calendaring management. This functionality at least includes appointment scheduling, appointment rescheduling, reminder functionalities, activity coordination, scheduling, and in general any functionality associated with the management, maintenance, and/or population of calendar dates.

The calendar action module 545 allows various actions to be one or more of automatically or semi-automatically triggered based upon one or more of an action associated with a calendared item, or information in the profile. For example, an action associated with a calendared item could be the request to send a reminder to an associated communication device to bring, for example, a picnic lunch to the park for meeting a friend on Saturday the 13^{th}. Optionally, the action module can apply various rules to calendared items and determine whether an action, such as a reminder, should be forwarded to a certain destination or displayed on the STB when a calendared item is within a certain time frame. These reminders could be based on one or more of the personal preferences stored in the profile or the action item itself.

The set-top box environment also provides the ability to utilize two-way, full-motion video, in addition to the HD video, while it does not suffer from the drawbacks associated with typical internet-based applications, such as latency, dropped frames, and the like. Various calendaring modules are thus capable of providing interaction with one or more other participants for example based on an invitation, which is more like a face-to-face interaction.

The SIP functionality/integration module 565 allows one or more SIP-based communications to be used in conjunction with the set-top box 500 and profile 400. These SIP-based communications could be run in parallel with various applications run on the set-top box 500 and, as discussed, can be bound to one or more other devices, such as a telephone, PDA, home phone, business phone, or in general any SIP-enabled device. In addition to being able to be run in parallel with one or more applications on the set-top box 500, the execution of a specific application, such as a calendaring application on the set-top box could trigger the establishment of a SIP communication and, once active, a corresponding communication on the set-top box could optionally be terminated.

The security module 570 can provide varying levels of security for the information within the profile 400. Furthermore, as previously discussed, a hierarchical security platform can be established with, for example, a master profile that regulates dependent profiles, such as those that would be established by parents for their children.

In general, since any information can be stored in the profile 400, various rules, policies, profiles, and the like can be established that govern not only access to, but dissemination of the information within the profile, such as calendared information, e.g., appointments, contacts, schedules, travel plans, free or busy information, invitations etc. For example, access to the various types of information in the profile can be regulated based on who is trying to access the information, what type of information is attempting to be accessed, what the accessed information is going to be used for, and the like, and can be analyzed by the security module 570 to determine whether that access or dissemination should be allowed. For example, the security module 570 can cooperate with the intelligent agent module (not shown) to assist with analysis of any security risk that may be associated with providing access to the information within the profile 400.

Communications applications module 575 enables various types of communications applications to be used with the set-top box 500. These communications include, for example, audio communications, video communications, chat communications, telephony type communications, or in general any communication between the set-top box, and another entity on the network, or with one or more of the devices associated with and connected to the set-top box, or communications associated with a bound device, such as a bound IP soft phone.

Conflict resolution module 580 allows a user to automatically or semi-automatically address conflicting items on a calendar. Options available upon the determination of a conflict can be one or more of flagging the two items as conflicting, when the conflict occurs, forwarding information to the user to determine which items should be scheduled, and which item(s) should be rescheduled, sending a "not available" identifier to the appointment setter and requesting the appointment be set at a new time, and requesting a new invitation from the appointment setter forwarding availability information based on the information in the calendar.

The video link module 585 allows a user to establish a communication link, such as an audio, video, or multi-media communications link, between one or more of an appointment setter, an agent, another entity, and the user. This video link can be used to coordinate schedules, calendar items, resolve conflicts, or in general just provides a richer user interface that is more akin to face-to-face scheduling.

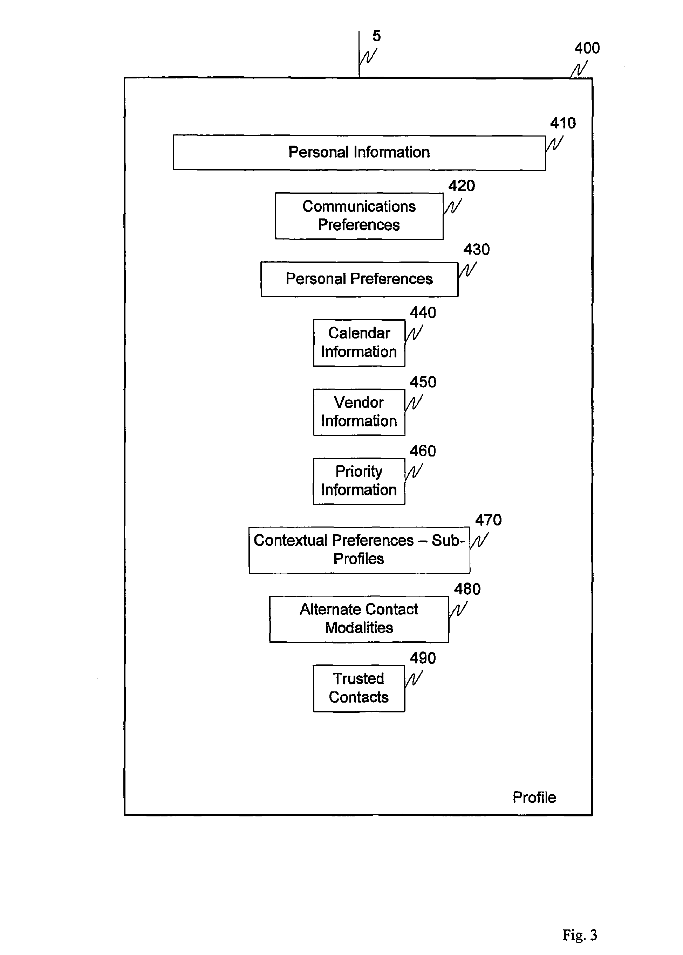

Fig. 3 outlines an exemplary profile 400. The exemplary profile 400 comprises one or more of personal information 410, communications preferences 420, personal preferences 430, calendar information 440, vendor information 450, priority information 460, contextual preferences and sub-profiles 470, alternate contact modalities 480 and trusted contact information 490.

As discussed, the personal information can include any information that a user would like to store. For example, examples of personal information include name, address, credit card information, communications preferences, restaurant preferences, availability preferences, and the like. The personal information 410 need not be expressly limited however to a single person, but instead can also apply to groups of individuals, one or more entities, or in general any entity that may include one or more persons, businesses, groups, or the like. Interfaces can be provided that allow access to the information stored within the profile, and this information can be edited, updated, deleted, or modified as appropriate. The updating, editing, or deleting of this information can be performed via an interface on the set-top box, or via any interface on a device associated with the set-top box. This access to the information within the profile can be password protected, and the information can be transferred via or in accordance with well-known encryption techniques and standards.

The communications preferences 420 provide the user the ability to store various types of communications preferences or modalities that govern not only the type of communication to access the user, e.g., video, chat, IM, telephone, or the like, but can also be used in conjunction with the presence information and/or communication routing.

The personal preferences 430 are a set of rules related to a particular user's personal preferences. These personal preferences can relate to any functionality of the set-top box, display characteristics of the set-top box, operation of the set-top box, operation of the calendaring functionality, or the like, and can be related to any one or more of menu options, communications preferences, contact preferences, calendaring preferences, set-top box management, or the like. Vendor information 450 stores various information that can be used for payment of goods and/or services ordered through or in conjunction with the use of the set-top box. This payment information can have a higher security level than other types of information within the profile 400, such that, for example, a password is required before the purchase for goods and services can be made. Additionally, the payment information can be limited to use by the contact/service provider 300.

The vendor information 450 can include such information as preferred vendors, vendors who should not be used, historical purchase or appointment information, account information, reference information associated with a particular vendor, or in general any information associated with a vendor. When new vendor is utilized, in conjunction with an intelligent agent module, new information can be added to the vendor information 450 and stored in the profile 400.

For example, a vendor could be a doctor's office. Information relating to not only historical doctor's visits but future appointments can be tracked and association with the vendor information 450 and optionally notes also associated with one or more of these calendar items.

In addition, also in conjunction with an intelligent agent module, the vendor information 450 can be dynamic such that, for example, if a user accesses a particular vendor's website, such as a doctor's office, a patient identifier, or the like can be populated into the vendor information 450 and, for example, if an appointment is scheduled, a historical record of that saved.

Priority information 460 includes any information, such as rules, that can be used to assist with prioritizing certain activities, applications, or in general, any functionality associated with the set-top box 500. This priority information 460 could also be used in conjunction with an intelligent agent to assist with determining prioritization of certain calendared items.

The contextual preferences and sub-profiles 470 establish preferences based on context that could also be categorized as sub-profiles depending on, for example, a particular application being run on the set-top box 500. As with other types of information, the contextual preferences 470 can be used in conjunction with the intelligent agent to provide a dynamic application behavior.

Alternate contact modalities information 480 outlines various contact modalities for a particular user, group of users, or entities. These alternate contact modalities can be used with communication preference information, personal preference information and/or priority information to assist with completion of an incoming communication to an endpoint. For example, based on information in the alternate contact modalities profile, one or more of the binding module and SIP functionality module can be utilized to complete an incoming communication to an endpoint where the user is located.

Trusted contacts 490 include information regarding one or more individuals, entities, or groups, that are trusted. For example, an entity can be trusted if it is approved by one or more of the content/service provider, the user, or one or more of a group of users. Additionally, an entity can be trusted if, for example, the user has had previous interactions with the entity and has identified them as being trusted.

Optionally, an intelligent agent can also be used in conjunction with trusted contacts 490 to analyze communications between the user's set-top box and other individuals or entities and upon, for example, a threshold number of transactions being completed in a satisfactory manner, the entity identified as trusted, with optionally a query being sent to the user for final approval before listing this individual or entity as trusted.

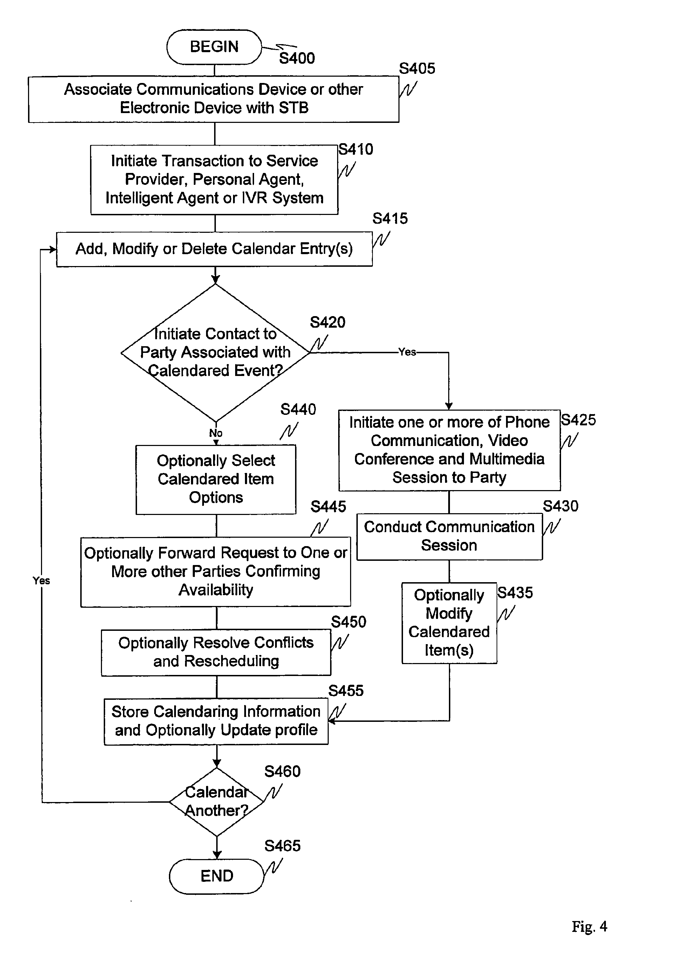

Fig. 4 outlines an exemplary method for adding, modifying, deleting or otherwise associating an item with a calendar. In particular, control begins in step S400 and continues to step S405. In step S405, one or more communications devices or other electronic devices are associated with the STB. Next, in step S410, a transaction is initiated to one or more of a service provider, personal agent, intelligent agent or IVR system. Then, in step S415, one or more of adding, modifying or deleting a calendar entry is performed. Control then continues to step S420.

In step S420, a determination is made whether to initiate contact through the party associated with the calendared event. If contact is to be initiated, control continues to step S425. Otherwise, control jumps to step S440.

In step S425, one or more of a phone communication, video conference and/or multi-media session is initiated to the party associated with the calendared event. Next, in step S430, the communication session is conducted. Then, in step S435, the calendared item(s) can optionally be modified with control continuing to step S455.

In step S440, options associated with a calendared item can optionally be selected. These options can include, for example, reminder features, notes, or in general any information or action associated with a calendared item. Next, in step S445, the request can optionally be forwarded to one or more of the parties associated with the calendared event that, for example, confirms availability. Then, in step S450, in the event of a conflict, the conflict can optionally be resolved and rescheduling commenced. Control then continues to step S455.

In step S455, the calendaring information can be stored and optionally information, such as information stored in the profile updated. Next, in step S460, a determination is made whether to calendar another item. If another item is to be calendared, control jumps back to step S415 with control otherwise continuing to step 465 where the control sequence ends.

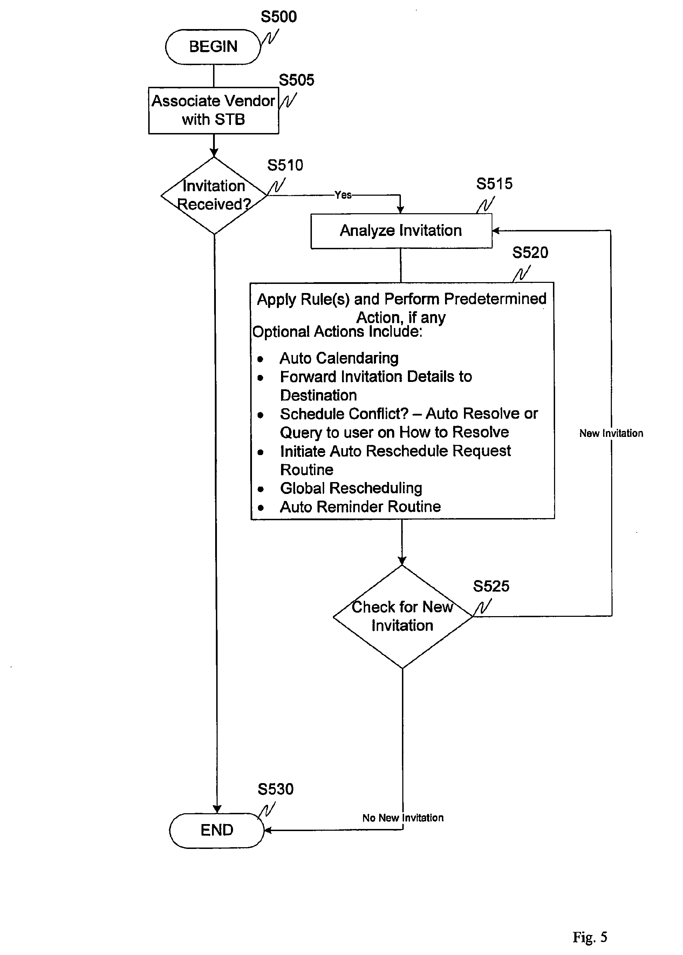

Fig. 5 outlines an exemplary method for invitation management. In particular, control begins in step S500 and continues to step S505. In step S505, one or more vendors are associated with the STB. It should be appreciated, that this step is optional and can act as a filter to try and prevent unwanted invitations from being received. Depending on information in the personal preferences 430, rules can be established that analyze incoming invitations and a determination made whether or not the invitation should be analyzed. For example, if upon rule analysis it is determined that invitations have been accepted from this entity before, while they may not be listed as a vendor associated with the STB, the system may optionally assume it is a welcomed invitation. However, in general, the personal preferences 430 and rules contained therein can be edited, modified, and can operate in a similar manner as spam control filters as is well known. Then, in step S510, a determination is made whether an invitation has been received. If an invitation has been received, control continues to step S515, with control otherwise jumping to step S530 where the control sequence ends.

In step S515, the invitation is analyzed. Next, in S520, one or more rules are applied and an action performed if needed. These optional actions include automatic calendaring, forwarding invitation details to one or more destinations, resolving conflicts, initiating an auto-reschedule request routine, global rescheduling, automatic reminder routine, or the like.

For example, for automatic calendaring, and provided certain rules criteria are met, the invitation can automatically be added to the calendar as a calendared event.

The forward invitation details to a destination routine can include analyzing the incoming information related to the invitation and forwarding information, such as inviter, other invitees, date, subject of the invitation, and the like to a destination, such as a communications device.

Should there be a scheduling conflict, the rules can be applied to one or more of automatically resolve the conflict or query the user on how to resolve the conflict. For example, the priority sorting routine can be applied to the incoming invitation and should there be a conflict, the invitation having the higher priority be accepted and entered into the calendar as a calendared item. If, for example, automatic resolution of the conflict cannot be accomplished, a query could be spawned to the user to request them to select one of the invitations or appointments over the other. For the non-selected appointment, an automatic rescheduling request could be sent to the party with the non-selected appointment.

Global rescheduling can be used by an entity, such as a doctor's office, when, for example, a doctor is not available on a particular day and there are a number of appointments scheduled thereon. For example, the user associated with the STB could indicate that they are not available for any appointments on a particular day and ask the system to automatically initiate a rescheduling routine such that everyone who has an appointment on a particular day is sent a request to reschedule at a future time.

The automatic reminder routine allows a user to receive one or more reminders a pre-determined time before the calendared item.

In step S525, a determination is made whether to check for a new invitation. If a new invitation has been received, control jumps back to step S515, with control otherwise continuing to step 530 where the control sequence ends if no new invitation has been received.

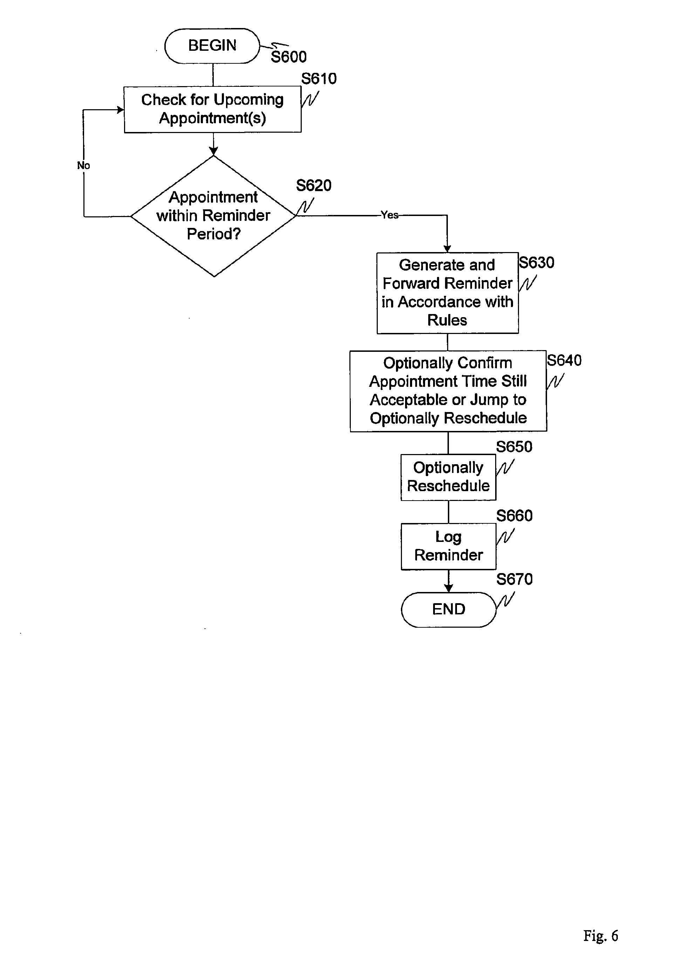

Fig. 6 outlines an exemplary method for managing reminders. In particular, control begins in step S600 and continues to step S610. In step S610, a check is made for upcoming appointments. Then, in step S620, a determination is made whether one or more appointments fall within the reminder triggering period. If no appointments appear within the reminder period, control jumps back to step S610 with control otherwise continuing to step S630.

In step S630, a reminder is generated and forwarded in accordance with one or more rules. The rules can specify such things as communication preferences and modalities, the types of information that should be sent with the reminder, who the reminder should be sent to, or in general any information associated with the calendared item. Next, in step S640, an option can be provided to confirm the appointment or jump to a rescheduling routine. This could be useful in the context of a business utilizing the calendaring application according to this invention so that they can confirm whether or not, for example, a patient received and confirmed receipt of their scheduled appointment. Then, in step S650, a rescheduling routine can optionally be provided to a user. Control then continues to step S660.

In step 660, and if a reminder is sent, the reminder can be logged and recorded. Control then continues to step S670 where the control sequence ends.

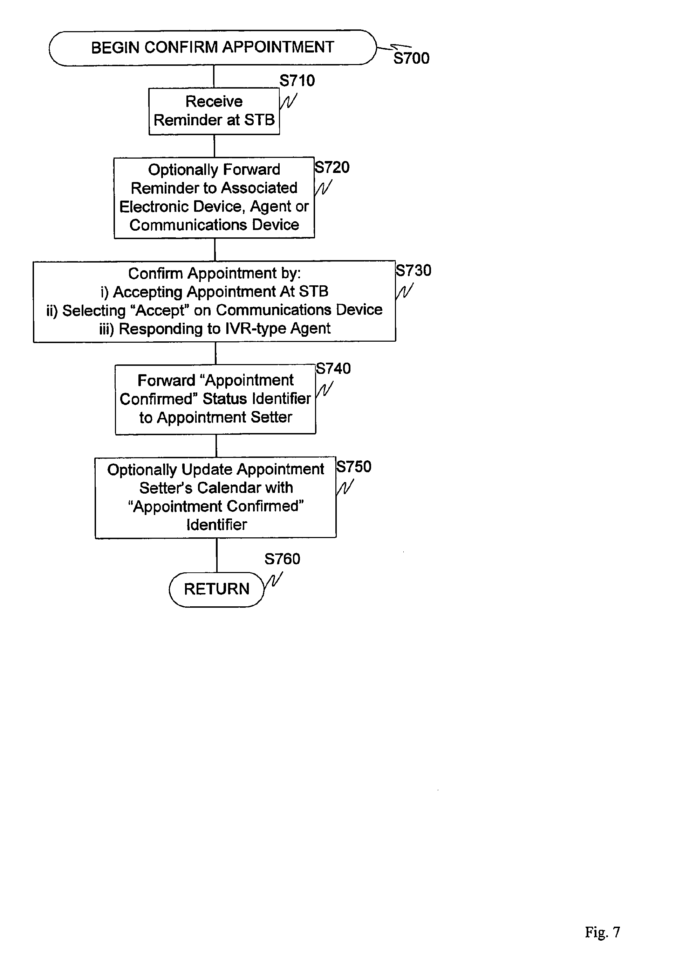

Fig. 7 outlines in greater detail the confirm appointment step S640. In particular, control begins in step S700 and continues to step S710. In step S710, the reminder is received at the set-top box for an associated calendared item. Next, in step S720, the reminder is optionally forwarded to an associated electronic device, agent or communications device. Then, in step S730, the appointment can be confirmed by one or more of accepting the appointment through a user interface associated with the STB, selecting "accept" on a communications device, for example, by pressing 1 for "accept" and 2 for "do not accept," and responding to an IVR-type agent. Control then continues to step S740.

In step S740, an appointment confirmed identifier can be returned to the appointment setter. Next, in step S750, the calendared item can optionally be updated with an appointment confirmed identifier. Control then continues to step S760 where the control sequence ends.

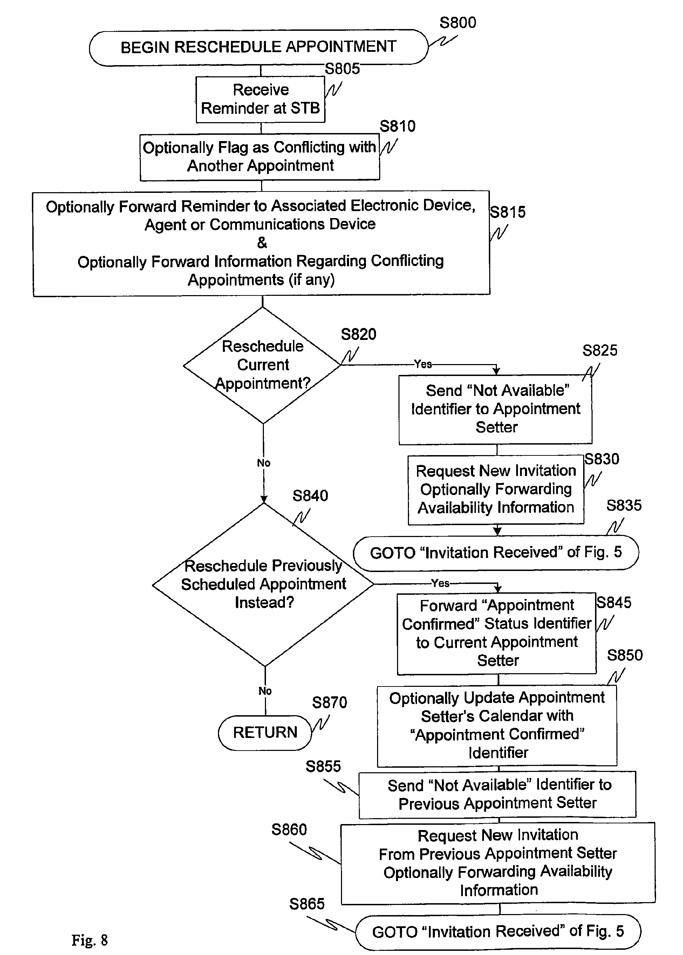

Fig. 8 outlines in greater detail the reschedule step S650 of Fig. 6. In particular, control begins in step S800 and continues to step S805. In step S805, a reminder is received at the set-top box. Next, in step S81 0, the reminder is optionally flagged as conflicting with another appointment. Then, in step S815, a reminder can optionally be forwarded to an associated electronic device, agent or communications device as well as information regarding the conflicting appointments (if any). Control then continues to step S820.

In step S820, a determination is made whether to reschedule the current appointment. If a determination is made to reschedule the current appointment, control continues to step S825, where a "not available" identifier can be sent to the appointment setter. Next, in step S830, a request for a new invitation optionally forwarding availability information from the invitee can be sent to the invitation sender. Control then continues to step S835 where control jumps back to the "invitation received" step of Fig. 5.

If rescheduling of the current appointment is not desired, control jumps to step S840 where a determination is made whether or not to reschedule a previously scheduled appointment instead of calendaring the newly received appointment request. If the previously scheduled appointment is to be rescheduled, control continues to step S845 with control otherwise jumping to step S870 where the control sequence returns to Fig. 6.

In step S845, an appointment confirmed status identifier is sent to the current appointment setter. In step S850, the calendar is optionally updated with the appointment confirmed identifier. Then, in step S855, a not available identifier is sent to the previous appointment setter. Control then continues to step S860. In step S860, a new invitation request is sent to the previous appointment setter that optionally includes availability information. Control then continues to step S865 where control jumps back to "the invitation received" step of Fig. 5. A number of variations and modifications of the invention can be used. It would be possible to provide for some features of the invention without providing others. The exemplary systems and methods of this invention have been described in relation to STB's and profile(s). However, to avoid unnecessarily obscuring the present invention, the description omits a number of known structures and devices. This omission is not to be construed as a limitation of the scope of the claimed invention. Specific details are set forth to provide an understanding of the present invention. It should however be appreciated that the present invention may be practiced in a variety of ways beyond the specific detail set forth herein.

Furthermore, while the exemplary embodiments illustrated herein show various components of the system collocated, certain components of the system can be located remotely, at distant portions of a distributed network 10, such as a LAN, cable network, and/or the Internet, or within a dedicated system. Thus, it should be appreciated, that the components of the system can be combined in to one or more devices, such as a STB, or collocated on a particular node of a distributed network, such as an analog and/or digital communications network, a packetswitch network, a circuit-switched network or a cable network. It will be appreciated from the preceding description, and for reasons of computational efficiency, that the components of the system can be arranged at any location within a distributed network of components without affecting the operation of the system. For example, the various components can be located in a switch such as a PBX and media server, gateway, a cable provider, in one or more communications devices, at one or more users' premises, or some combination thereof. Similarly, one or more functional portions of the system could be distributed between a communications device(s), such as a STB, and an associated computing device. The one or more functional portions of the system could be also be installed in a TV or TV tuner card, such as those installed in a computer.

Furthermore, it should be appreciated that the various links, such as link 5, connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radio-wave and infra-red data communications.Also, while the flowcharts have been discussed and illustrated in relation to a particular sequence of events, it should be appreciated that changes, additions, and omissions to this sequence can occur without materially affecting the operation of the invention.

In yet another embodiment, the systems and methods of this invention can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this invention. Exemplary hardware that can be used for the present invention includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this invention can be implemented as program embedded on personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present invention describes components and functions implemented in the embodiments with reference to particular standards and protocols, the invention is not limited to such standards and protocols. Other similar standards and protocols not mentioned herein are in existence and are considered to be included in the present invention. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present invention.

The present invention, in various embodiments, configurations, and aspects, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments, configurations, or aspects for the purpose of streamlining the disclosure. The features of the embodiments, configurations, or aspects of the invention may be combined in alternate embodiments, configurations, or aspects other than those discussed above. This method of disclosure is not to be interpreted as reflecting an intention that the claimed invention requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the invention.

Moreover, though the description of the invention has included description of one or more embodiments, configurations, or aspects and certain variations and modifications, other variations, combinations, and modifications are within the scope of the invention, e.g., as may be within the skill and knowledge of those in the art, after understanding the present disclosure. It is intended to obtain rights which include alternative embodiments, configurations, or aspects to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A means for operating a set-top box having an operating system layer operable to support cable network interconnectability and to provide an application platform comprising:
means for establishing one or more profiles, each profile including personal information and personal preferences, one or more of the personal information and personal preferences used in association with a calendaring application; and
means for managing the calendaring application, the management including one or more of creation, editing, rescheduling and reminder forwarding.

2. A method of operating a set-top box having an operating system layer operable to support cable network interconnectability and to provide an application platform comprising:
establishing one or more profiles, each profile including personal information and personal preferences, one or more of the personal information and personal preferences used in association with a calendaring application; and
managing the calendaring application, the management including one or more of creation, editing, rescheduling and reminder forwarding.

3. The invention of any of the preceding claims, wherein the one or more profiles comprise one or more of personal information, communications preferences, personal preferences, calendar information, vendor information, priority information, contextual preferences, one or more sub-profiles, alternate contact modalities and one or more trusted contacts.

4. The invention of any of the preceding claims, wherein the set-top box is adapted to receive one or more of television programming, data, voice information, internet communications, VOIP communications, ecommerce communications, communication from attached electronic devices and content.

5. The invention of any of the preceding claims, wherein the set-top box comprises an I/O interface operable to communicate with one or more trusted entities.

6. The invention of any of the preceding claims, wherein the set-top box comprises a menu module, the menu module operable to display one or more menus based on the calendaring application.

7. The invention of any of the preceding claims, wherein the calendaring application includes an initiate service transaction request that includes information from one or more profiles, the initiate service transaction request utilizing internet-based protocols to communicate with one or more of a trusted entity, a content/service provider, an intelligent agent and an IVR system.

8. The invention of any of the preceding claims, wherein the set-top box comprises a binding module operable to bind one or more additional devices to the set-top box, and wherein the one or more additional devices include a phone, a SIP enabled device, an electronic communication device, a soft phone, a multimedia device, an audio device, a PDA, a video device and a electronic device.

9. The invention of any of the preceding claims, wherein the set-top box comprises a security module operable to one or more of filter, analyze, restrict access to, restrict dissemination of and control information in the one or more profiles.

10. The invention of any of the preceding claims, wherein the set-top box comprises one or more sub-profiles, the behavior of which is governed by the one or more profiles.
